# EUROPÄISCHE PATENTSCHRIFT

(11) **EP 1 534 432 B1**
(45) Veröffentlichungstag und Bekanntmachung des Hinweises auf die Patenterteilung: **03.12.2008**
(21) Anmeldenummer: 03792404.0
(22) Anmeldetag: 21.08.2003
(51) Int. Cl.: B01L 3/00, B01J 19/00, B81B 1/00

(54) **MIKROFLUIDISCHE SYSTEME MIT HOHEM ASPEKTVERHÄ LTNIS**
MICROFLUIDIC SYSTEM WITH HIGH ASPECT RATIO
SYSTEMES MICROFLUIDIQUES A RAPPORT DE FORME ELEVE

(30) Priorität: 23.08.2002 DE 10238825
(43) Veröffentlichungstag der Anmeldung: 01.06.2005
(73) Patentinhaber: Roche Diagnostics GmbH, 68305 Mannheim (DE); F. Hoffmann-La Roche AG, 4070 Basel (CH)
(72) Erfinder: OCVIRK, Gregor, 68239 Mannheim (DE); EFFENHAUSER, Carlo, 69469 Weinheim (DE); KOELKER, Karl-Heinz, 67269 Gruenstadt (DE)
(86) Internationale Anmeldenummer: PCT/EP2003/009263
(87) Internationale Veröffentlichungsnummer: WO 2004/018101

(56) Entgegenhaltungen:
- US-B1- 6 210 986
- US-B1- 6 409 072

## Beschreibung

Die Erfindung bezieht sich auf das technische Gebiet von mikrofluidischen Kanalstrukturen sowie der Herstellung mikrofluidischer Kanalstrukturen, die sich besonders bei fluidischen Kanälen mit einem hohem Aspektverhältnis als problematisch erweist.

Die Verwendung mikrofluidischer Systeme findet in der heutigen Zeit in vielen technischen Gebieten statt. Insbesondere auf dem Gebiet der modernen Analyseverfahren finden mikrofluidische Systeme ihren Einsatz. Moderne Analysemethoden zeichnen sich unter anderem dadurch aus, dass zur Analyse nur noch geringe Probenmengen verwendet werden, sodass sich die Analysesysteme als wirkstoffschonend und umweltfreundlich erweisen. Oftmals stehen jedoch auch zur Analyse nur geringe Probenmengen zur Verfügung, sodass ein Probenhandling häufig im Bereich von wenigen Mikrolitern erforderlich ist. Des weiteren zeigt sich, dass es z. B. im medizinischen oder diagnostischen Bereich eine Bestrebung ist, Probenmengen weitestgehend zu minimieren. Dem Patienten sollen somit aufwendige Entnahmen von Körperflüssigkeiten, wie z. B. Blutentnahme, erspart bleiben.

Eine wesentliche Voraussetzung zum Handling geringer Probenmengen ist dabei unter anderem, dass eine exakt definierte Mikrostruktur zur Probenbearbeitung vorgegeben werden kann. Dies ist z. B. bei Konzentrationsbestimmungen eines Analyten in der Probe von Bedeutung, da hier oftmals anhand der Mikrostruktur ein Probenvolumen definiert werden muss.

Bei der Herstellung mikrofluidischer Systeme zeigt sich jedoch, dass diese herstellungsbedingt häufig keine exakt definierten Kanalstrukturen aufweisen oder in Abhängigkeit der Herstellungsmethode, z. B. Verzweigungsstellen von Kanälen sogenannte Totvolumina verursachen. Hierbei befindet sich ein Teil eines Fluids, das als Totvolumen bezeichnet wird, aufgrund von Verzweigungen oder Verbindungen von Kanälen in Kanalbereichen, die nicht von dem durchfließenden Fluid in der Mikrostruktur durchströmt werden. Das dort befindliche Fluid steht somit, einmal in diesem Kanalbereich eingeschlossen, nicht mehr der eigentlichen Verwendung zur Verfügung. Konzentrationsbestimmungen, um nur ein Beispiel zu nennen, werden somit fehlerhaft erstellt.

Mikrostrukturen, bei denen sich eine Herstellung als besonders schwierig erweist, sind insbesondere mikrofluidische Systeme mit einem hohen Aspektverhältnis, die in letzter Zeit immer häufiger eine Anwendung finden. Hierbei zeichnen sich mikrofluidische Kanäle mit einem hohem Aspektverhältnis dadurch aus, dass sie trotz einer geringen Breite im Bereich von nur einigen Mikrometern eine große Tiefe aufweisen, die bis in einen Bereich von einigen Zentimetern angestrebt wird. Ein Anwendungsbeispiel für Kanäle mit hohem Aspektverhältnis sind z. B. Filterungsprozesse, bei denen sich innerhalb eines Kanales ein Filtermaterial befindet. Bei einer in den Kanal aufgegebenen Probe bildet sich z. B. aufgrund der Schwerkraft ein Filtrat im unteren Bereich des Kanales, welches dort gesammelt werden kann. Hierbei ist es wichtig, dass sich der Kanal einerseits durch eine hinreichende Tiefe auszeichnet, damit ein Filterungsprozess vollständig ablaufen kann. Zum anderen soll der Kanal nur über eine geringe Breite verfügen, um somit eine Minimierung des Probenvolumens zu gewährleisten. Ein Beispiel für solche Filterungsprozesse ist der Bereich der Plasmagewinnung aus Blut. Hierbei werden die Blutkörperchen im oberen Bereich des Kanales im Filtermaterial zurückgehalten, während das Plasma im unteren Bereich des Kanals als Filtrat gewonnen werden kann. Prinzipiell ist eine vielfältige Anzahl an Anwendungsmöglichkeiten denkbar, die insbesondere im Bereich der Probenaufbereitung liegen können, und bei denen partikuläres Material, wie z. B. an Partikel gebundene Probenkomponenten, von den restlichen Probenbestandteilen entfernt wird.

Ein weiteres Anwendungsgebiet für mikrofluidische Kanalsysteme mit hohem Aspektverhältnis zeigt sich auf dem Gebiet zur Herstellung von Flüssigkeitsmischungen. Hierbei sind ebenfalls vielfältige Anwendungsmöglichkeiten denkbar, die eine effektive Mischung von geringen Probenvolumina erforderlich machen. Beispielsweise sind hierfür die Herstellung von Enzym-Substratgemischen, oder allgemein die Mischung von Reagenzien und Probe, bei denen häufig ein geringer Proben- und/oder Reagenzienverbrauch eine wichtige Rolle spielen, sodass die Verwendung von Mikrostrukturen hier besonders vorteilhaft ist. Allgemein erweist sich die Verwendung von Mikrostrukturen mit hohem Aspektverhältnis z. B. bei der Herstellung von Elutionsgradienten, Verdünnungsreihen oder Konzentrationsgradienten, um nur einige Beispiele zu nennen, als vorteilhaft, sobald nur mit geringem Fluidvolumina gearbeitet wird.

Zusätzliche Anwendungsbeispiele ergeben sich ebenfalls auf dem Gebiet der Analyse von Reaktionsprodukten, deren Bildung durch die Mischung von Stoffen initiiert wird, sowie bei der Analyse deren Kinetik. Zur Vermessung der Kinetik ist es dabei wichtig, dass eine Mischung der verschiedenen Stoffe, die miteinander reagieren, sofort und vollständig erfolgt, sodass ein Reaktionsstart für die gesamte Probe als einheitlich angenommen werden kann.

Es ist natürlich auch denkbar, dass aufgrund der mikrofluidischen Strukturen eine Trennung von komplexen Proben erfolgt, oder, dass eine kontinuierliche Entnahme einer Probe zur Analyse mittels derartiger Kanalstrukturen bewirkt wird. Hierbei kann z. B. eine simultane Bestimmung mehrerer Analyte bei einmaliger Probenaufgabe verwirklicht werden, indem durch eine ausgewählte Fluidführung die Probe zu mehreren Testfeldern gleichzeitig verteilt wird.

Prinzipiell sind vielfältige Anwendungsmöglichkeiten, insbesondere für Mikrostrukturen mit einem hohen Aspektverhältnis denkbar. Besonders im Bereich der modernen Analyse, in dem oftmals Mikrobauelemente bereits verwendet werden, ist eine Integration von mikrofluidischen Kanalsystemen unumgänglich. Beispiele hierfür sind z. B. Mikrodialysesysteme, die z. B. zur Glucosebestimmung bei Diabetikern zum Einsatz kommen.

Im Stand der Technik werden deshalb vielerlei Möglichkeiten offenbart, mikrofluidische Systeme mit hohem Aspektverhältnis herzustellen sowie Möglichkeiten für deren Anwendung.

Das Patent US 6,251,248 offenbart beispielhaft eine Mikrostruktur, die aufgrund einer kontrollierten Schwellung eines polymeren Materials geformt wird. Mittels einer elektrolytischen Lösung und eines ionomeren Polymers, kann aufgrund eines kontrollierten Stromflusses das System kontrolliert geformt werden. Weiterhin werden in den Dokumenten US 6,068,684 und US 6,051,866 Mikrostrukturen offenbart, die mittels Ätzprozesse sowie Bestrahlung hergestellt werden. Hierbei sind verschiedene Varianten des Ätzens und der Bestrahlung möglich, wie sie z. B. von strukturierten Belichtungen aus dem Bereich von Photolackschichten bekannt sind. Das Dokument WO 99/36941 verwendet zur Herstellung von Mikrostrukturen u. a. das Pattern von Metall.

Alle genannten Methoden des Standes der Technik beinhalten den Nachteil, dass aufgrund des Herstellungsprozesses Voraussetzungen an das Material für die Mikrostruktur geknüpft werden in Abhängigkeit des gewählten Verfahrens. Oftmals erweist sich dabei eine exakte Steuerung des Prozesses zur Ausbildung eines Kanals als schwierig, sodass eine gleichmäßige Formung der Kanalstruktur häufig nicht gewährleistet werden kann. Dies zeigt sich z. B. häufig bei Ätzverfahren, bei denen es im oberen Bereich der Kanalstruktur zu Verbreiterungen kommen kann, während das untere Kanalende verjüngt ist. Oftmals zeigt es sich deshalb, dass die Herstellung eines Kanals mit einer gewünschten Tiefe und somit die Wahl des Aspektverhältnisses durch die Herstellungsmethode begrenzt ist und nicht beliebig hoch gewählt werden kann. Mit Hilfe der im Stand der Technik gängigen Verfahren können üblicherweise Aspektverhältnisse < 3 ermöglicht werden. Des weiteren erweisen sich die Verfahren als aufwendig, sodass nicht nur aufgrund der für die Verfahren notwendigen Materialien, sondern auch durch die Herstellungsverfahren selbst erhebliche Kosten verursacht werden. Besonders für die Mischung von Flüssigkeiten zeigt sich weiterhin, dass herstellungstechnisch-bedingt, die hierfür vorgesehenen Kanalstrukturen - wie bereits beschrieben-bei gegebener Querschnittsfläche ein geringes Aspektverhältnis aufweisen, sodass z. B. die Mischung verschiedener Proben unvollständig und verlangsamt erfolgt. Doch auch die Materialauswahl in Abhängigkeit vom Herstellungsprozess, schränken die Anwendung der jeweiligen Mikrostruktur ein. Beispielsweise weisen die Kanalwände einer Mikrostruktur, welche monolithisch mittels Stereolithographie hergestellt wird, hohe Oberflächenrauhigkeiten auf, sodass eine mikroskopische Beobachtung der mikrofluidischen Struktur nicht möglich ist. Eine Verwendung einer auf diesem Wege hergestellten Mikrostruktur im analytischen Bereich, bei dem z. B. eine optische Detektion eines Fluids im Kanal erfolgen soll, wäre somit nicht möglich.

Der Erfindung liegt die Aufgabe zugrunde, ein mikrofluidisches System mit hohem Aspektverhältnis sowie ein Verfahren zur Herstellung eines solchen Systems bereitzustellen, das die beschriebenen Nachteile des Standes der Technik überwindet.

Die Erfindung beinhaltet ein Kanalsystem für mikrofluidische Ströme mit einem großen Aspektverhältnis. Das Kanalsystem weist einen ersten und einen zweiten Körper auf, die miteinander in der Weise verbunden sind, dass eine erste Oberfläche des ersten Körpers und eine zweite Oberfläche des zweiten Körpers einen definierten Abstand, der kleiner als 1mm ist, zueinander haben und dadurch einen ersten fluidischen Kanal zwischen der ersten und der zweiten Oberflächen gebildet wird. Weiterhin beinhaltet das Kanalsystem einen dritten Körper, der mit den genannten zwei Körpern oder einem weiteren Körper ebenfalls in der Weise verbunden ist, dass eine dritte Oberfläche des dritten Körpers mit jeweils einer weiteren Oberflächen von zwei Körpern einen definierten Abstand zueinander aufweisen und dadurch ein zweiter fluidischer Kanal zwischen der dritten Oberflächen und der zwei weiteren Oberflächen gebildet wird. Das so entstehende Kanalsystem ist dadurch charakterisiert, dass der erste Kanal den zweiten Kanal kreuzt, sodass das Kanalsystem mindestens drei fluidische Anschlüsse beinhaltet, durch die ein Fluid zu- und / oder abfließen kann.

Das erfindungsgemäße Kanalsystem zeichnet sich durch ein einfaches und kostengünstiges Herstellungsverfahren aus. Hierbei sind die Materialien der Körper frei wählbar und können dem jeweiligen vorgesehenen Anwendungsgebiet angepasst werden. Vorzugsweise besitzen die Körper eine Oberflächenbeschaffenheit mit einer geringen Rauhigkeit im Verhältnis zu dem definierten Abstand zwischen den Oberflächen, der im folgenden auch als Kanalbreite bezeichnet wird. Die Oberflächenbeschaffenheit zeichnet sich weiterhin vorteilhafterweise dadurch aus, dass sie sich inert gegenüber den zur Verwendung vorgesehenen Fluiden verhält.

Durch das erfindungsgemäße Herstellungsverfahren ist es möglich, durch die Dimensionen der Körperoberflächen die Tiefe des Kanales und durch die Wahl des definierten Abstandes zweier Oberflächen die Breite des Kanales frei zu wählen. Im Vergleich zum Stand der Technik kann hierdurch das Aspektverhältnis beliebig hoch gewählt werden, und zwar können für die erfindungsgemäße Vorrichtung Aspektverhältnisse von > 10 oder gar > 100 erreicht werden.

Die erfindungsgemäßen mikrofluidischen Kanalstrukturen zeichnen sich weiterhin dadurch aus, dass eine exakt definierte Struktur ausgewählt werden kann, die eine Kreuzung zweier Kanäle ermöglichen, ohne dass sich ein Totvolumen an den Kreuzungsstellen ausbildet.

Der Begriff fluidischer Anschluss wird im Sinne der Erfindung durch die Strömungsrichtung des Fluids näher definiert, sodass in Abhängigkeit der Strömungsrichtung ein fluidischer Anschluss auch als Zufluss bzw. Abfluss bezeichnet werden kann. Ein erfindungsgemäßes Kanalsystem kann hierbei natürlich mehrere Strömungsrichtungen aufweisen, die im folgenden auch als Flußrichtung bezeichnet wird. Die Strömungsrichtung ändert sich hierbei in Abhängigkeit der geometrischen Ausrichtung des jeweiligen Kanals. Das erfmdungsgemäße Kanalsystem ist so ausgebildet, dass es mindestens drei fluidische Anschlüsse aufweist, die miteinander fluidisch verbunden sind. Prinzipiell kann das Kanalsystem jedoch beliebig viele Kanäle sowie Zu- und Abflüsse beinhalten, wobei sich die Kanäle zumindest teilweise kreuzen. Die Breite der Kanäle wird dabei, wie bereits beschrieben, durch den Abstand der Oberflächen der jeweiligen Körper definiert und kann dabei fast beliebig klein bis z. B. in den Bereich von wenigen Mikrometern gewählt werden. Durch die Größe der Körper, d. h. die Seitenlängen der Oberflächen von zwei miteinander verbundenen Oberflächen, die die Tiefe des Kanals bestimmen, und vorzugsweise im wesentlichen senkrecht zur Flussrichtung des Fluids verlaufen, ist jede beliebige Tiefe für das Kanalsystem frei wählbar, sodass problemlos eine Tiefe von mehreren Zentimetern erreicht werden kann. Das erfindungsgemäße Kanalsystem kann folglich Aspektverhältnisse > 3 im Vergleich zum Stand der Technik mühelos erzielen. Durch das Zusammenfügen der Körper - wie beschrieben - können beliebige Formen von Kreuzung der Kanäle gebildet werden, ohne dass hierbei ein Totvolumen entsteht.

Beispielsweise seien hier die Ausbildungen von sich kreuzenden Kanälen in Form eines T-, Y oder Kreuzstückes genannt. Bei der Mischung von Flüssigkeiten zeigt das erfindungsgemäße Kanalsystem, dass eine direkte Durchmischung von Fluiden problemlos möglich ist. Weiterhin wird durch die Verwendung von sich kreuzenden Kanälen mit hohem Aspektverhältnis die Mischung der Fluide erheblich begünstigt, da sich im Gegensatz zum Kanalsystem mit niedrigem Aspektverhältnis, bei gegebener Querschnittsfläche die Zeit bis zur vollständigen Durchmischung verringert. Dies ist durch eine Vergrößerung der "Kontaktflächen" der an sich grenzenden Kanäle zu erklären und wird anhand der Figuren im Folgenden noch näher erläutert.

Vorteilhafte Ausführungsform des Kanalsystems weisen bevorzugt die genannten, sich kreuzenden Strukturen auf.

Beinhaltet das Kanalsystem drei Körper, von denen zwei Körper bereits zu einem mikrofluidischen Kanal verbunden sind, wird z. B. der dritte Körper mit jeweils einer Oberfläche des ersten und des zweiten Körpers so verbunden, dass die sich kreuzenden Kanäle im wesentlichen ein T-Stück oder ein Y-Stück bilden. Beinhaltet das Kanalsystem weiterhin einen vierten Körper, sodass der dritte Körper mit jeweils einer Oberfläche des ersten und mit einer Oberfläche des vierten Körpers verbunden ist, und eine weitere Oberfläche des vierten Körpers mit einer weiteren Oberfläche des zweiten Körpers verbunden ist, bilden die sich kreuzenden Kanäle im wesentlichen ein Kreuzstück. Die Form der Kanalstruktur ist prinzipiell frei wählbar, sodass beliebig viele Möglichkeiten denkbar sind. In Abhängigkeit von der Anordnung und der Form der Körper kann somit jede beliebige Form von sich kreuzenden Kanälen gebildet werden. Um ein möglichst hohes Aspektverhältnis zu erhalten, sind in einer bevorzugten Ausführungsform die Abstände zwischen den Oberflächen der Körper < als 1 mm, wobei bevorzugterweise die Seitenlängen der miteinander verbundenen Oberflächen, die im wesentlichen senkrecht zur Flussrichtung verlaufen, eine Länge von > 1 cm besitzen, sodass durch diese Seitenlänge eine entsprechende Tiefe des Kanals gebildet wird. Es zeigt sich bei einigen Anwendungsgebieten, wie z. B. Filtrationsprozessen, dass die Seitenlängen der Körper, die die Tiefe des Kanals bestimmen, ebenfalls parallel zur Flußrichtung ausgerichtet sein können. Das Fluid fließt dann entlang der Kanaltiefe, was sich z. B. bei Trennverfahren, die die Schwerkraft ausnutzen, als vorteilhaft erweisen kann. Generell zeichnet sich eine vorteilhafte Ausführungsform des Kanalsystems dadurch aus, dass die Seitenlängen der Oberfläche, die die Tiefe des Kanals bestimmen, um eine vielfaches größer sind, als der definierte Abstand zwischen den Oberflächen, sodass sich ein großes Aspektverhältnis ergibt Bevorzugterweise ist das Aspektverhältnis mindestens eines Kanals im Kanalsystem > 3. Vorteilhafterweise sind die Oberflächen, die den Kanal begrenzen, planar ausgebildet, sodass der gebildete Kanal zwischen den Oberflächen möglichst eben geformt ist. Dies bedeutet, dass die Rauhigkeit der Oberflächen möglichst klein gewählt wird, im Verhältnis zur vorgesehenen Kanalbreite. In einer vorteilhaften Ausführungsform weist das Kanalsystem Verbindungselemente auf, welche von den zu verbindenden Körpern unabhängige Elemente darstellen und durch die die jeweiligen Körper miteinander verbunden werden. Diese Verbindungselemente besitzen vorzugsweise eine konstante Dicke, sodass die Kanalbreite, die sich daraus ergibt, ebenfalls konstant ist. Beispielsweise werden solche Verbindungselemente aus einer Folie gebildet, die z. B. eine Dicke von < 100 µm aufweist. Erfindungsgemäß bevorzugt ist, dass die Verbindungselemente nur als Abstandshalter während des Herstellungsprozesses verwendet werden, um einen gleichmäßigen Abstand zwischen den Oberflächen der Körper zu garantieren und nach dem Verbinden der Körper aus dem Kanalsystem wieder entfernt werden. Hierbei besteht z. B. die Möglichkeit, die Körper miteinander durch ein Klebemittel zu verbinden.

Das Klebemittel kann sowohl als Verbindungselement selbst dienen und bei gleichmäßigem Auftragen einen definierten Abstand zwischen den Oberflächen ermöglichen. Es ist jedoch auch denkbar, dass das Klebemittel zum Verbinden der Verbindungselemente mit den jeweiligen Oberflächen dient. Vorzugsweise ist das Klebemittel so beschaffen, dass hierdurch eine fluidische Abdichtung des Kanalsystems erfolgt, wobei sich das Klebemittel inert gegenüber den zur Verwendung vorgesehenen Fluiden verhält.

Vorzugsweise weisen die Oberflächen der Körper, die jeweils einen Kanal begrenzen, im wesentlichen ein gleiches Flächenmaß auf, sodass die Körper optional an die gewünschte Kanalstruktur angepasst werden können. Weitere bevorzugte Ausführungsformen ergeben sich hinsichtlich des gewählten Anwendungsgebietes des mikrofluidischen Systems. Ist beispielsweise ein Trennmedium in mindestens einem Kanal vorhanden, können z. B. einerseits Auftrennungen von Proben und Reaktiongsgemischen und andererseits Filtrationen ausgeführt werden. Macht man sich z. B. bei Filtrationsprozessen die Schwerkraft zur Gewinnung eines Filtrats zu nutzen, fließt das Fluid bei derartigen Anwendungen entlang der Kanaltiefe. In diesem Bereich des Kanalsystems verläuft dann die Seitenlänge der Körper, die die Tiefe dieses Kanals bestimmen, parallel zur Flußrichtung. Die Integration von zusätzlichen Bauelementen in das Kanalsystem zeigt sich weiterhin auf dem Gebiet der Optik als vorteilhaft. Hierbei ermöglicht die Integration von mikrooptischen Systemen, wie z. B. Mikrolinsen, reflektierenden Oberflächen wie Spiegel und/oder Photodioden, z. B. die optische Detektion von Analyten in Mikrokanälen.

Beispielsweise kann durch die Integration von fokussierenden Linsen in die Kanalbegrenzungswände die erforderliche Justiergenauigkeit bei Einkopplung der anregenden Strahlung verringert werden, oder durch die Integration von mindestens zwei reflektierenden Flächen in die Kanalbegrenzungswände die optische Weglänge bei Absorptions- und Fluoreszenzdektion erhöht werden, so dass es zur Steigerung der Meßempfindlichkeit kommt. Derartige Integrationen von Bauelementen ermöglichen z. B. einen portablen Einsatz des Instruments, da sich die Justiergenauigkeiten verringern. Des weiteren ergeben sich Möglichkeiten zur spektrometrischen Messung in Mikrokanälen durch z. B. simultane Anregung und Detektion von Analyten im Kanalsystem. Hierbei ist z. B. eine Detektion von an Kanalwänden immobilisierten Analyten denkbar, um nur einige Beispiele zu nennen.

Weiterhin kann durch Einfügen von Medien, deren Volumen z. B. chemisch aktuierbar ist, eine Ventilfunktion in Mikrokanälen verwirklicht werden. Die Steuerung von Flüssen durch Ventilfunktionen in mikrofluidischen Strukturen zeigt sich beispielsweise dann als vorteilhaft, wenn Kanalsegmente temporär abgegrenzt werden sollen, um z. B. Injektionslösungen und Reaktionsgemische fluidisch zu isolieren.

Es ist weiterhin denkbar, dass mindestens zwei Oberflächen der Körper des Kanalsystem unterschiedliche physikalische und/oder chemische Eigenschaften aufweisen, sodass das Kanalsystem hierdurch eine optimierte Anpassung an das jeweilige Anwendungsgebiet erfährt. Hierbei sind z. B. Eigenschaften der Oberfläche, wie Transparenz oder Leitfähigkeit, wie auch Eigenschaften der Materialien der Körper selbst, wie elektrische und thermische Leitfähigkeit, angesprochen. Zeichnet sich eine Begrenzungswand eines Mikrokanals z. B. durch magnetisierbare Eigenschaften aus, kommt es nach Beladung des Mikrokanals mit magnetischen Partikeln zur Retention der Partikel an der Kanalwand. Eine derartige Anwendung ist z. B. bei Assays, welche magnetische Partikel als austauschbare Oberfläche und Träger von Reagenzien, wie z. B. Antikörpern, einsetzen, von Nutzen. Auf diese Weise können durch geeignete Waschvorgänge spezifisch gebundene Probenbestandteile mit einer geeigneten Waschlösung eluiert werden.

Besitzt das Kanalsystem die Fähigkeit, die Temperatur eines Körpers gezielt zu verändern, ist es beispielsweise hierdurch möglich, durch lokale Erhitzung eines Wandelelements eine Flüssigkeitsbewegung in Richtung eines kühleren Wandelelements zu induzieren. Hierbei wird für eine thermisch induzierte Bewegung die Abhängigkeit der Oberflächenspannung von der Temperatur ausgenutzt.

Weiterhin ist Gegenstand der Erfindung ein Verfahren zur Herstellung mikrofluidischer Kanalsysteme mit einem großen Aspektverhältnis, vorzugsweise mit einem Aspektverhältnis von größer als 10. Das Verfahren beinhaltet das Verbinden einer ersten Oberfläche eines ersten Körpers mit einer zweiten Oberfläche eines zweiten Körpers in der Weise, dass ein definierter Abstand, der kleiner als 1mm ist, zwischen der ersten und der zweiten Oberfläche vorliegt und ein fluidischer Kanal zwischen diesen Oberflächen gebildet wird. Dieser Vorgang wird wiederholt mit einer dritten Oberfläche eines dritten Körpers, die mit jeweils einer weiteren Oberfläche der zwei Körper oder eines weiteren Körpers verbunden wird. Die Körper werden über ihre Oberflächen ebenfalls wieder in der Weise miteinander verbunden, dass ein definierter Abstand zwischen den Oberflächen der Körper vorliegt, sodass ein fluidisches Kanalsystem aus mindestens zwei sich kreuzenden Kanälen gebildet wird, und die Kanäle sich in der Weise kreuzen, dass das Kanalsystem mindestens drei fluidische Anschlüsse beinhaltet, durch die ein Fluid zu- oder abfließen kann. Bevorzugte Ausführungsform des Verfahrens ergeben sich wie beschrieben.

Im folgenden wird anhand einiger Bespiele die Erfindung näher beschrieben, ohne dass hierdurch eine Einschränkung auf die dargestellten Ausführungsformen erfolgt.
- Figur 1:: Herstellung einer mikrofluidischen Kanalstruktur mit Abstandshaltern
- Figur 2:: Mikrofluidische Kanalstruktur in Form eines T-Stücks mit einem Filtermedium
- Figur 3:: Mikrofluidische Kanalstruktur in Form eines Y-Stücks
- Figur 4:: Mikrofluidische Kanalstruktur mit zwei sich kreuzenden Kanälen
- Figur 5:: Mikrofluidische Kanalstruktur mit einem Array mikrofluidischer Kanäle

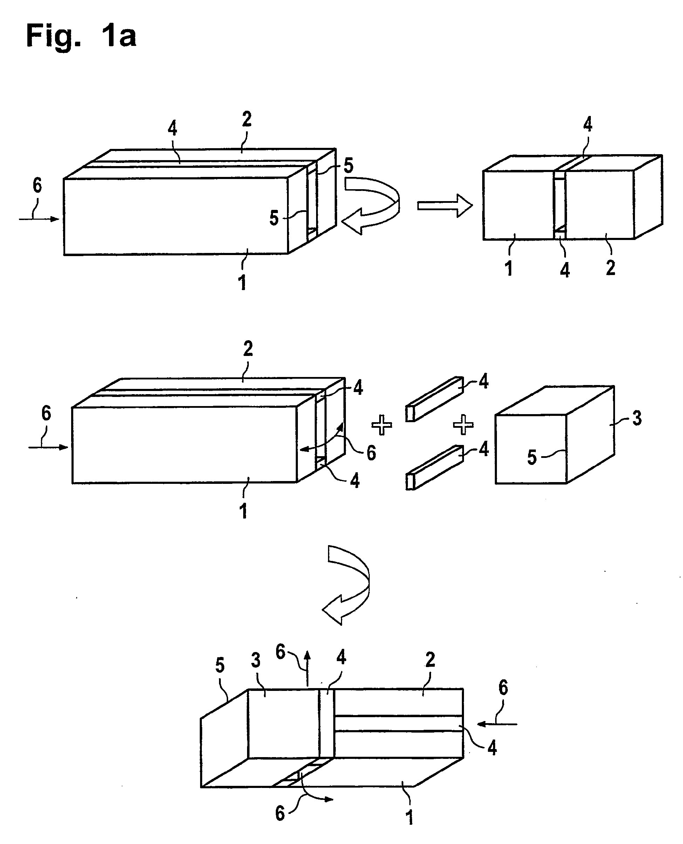

Figur 1a bis e zeigt beispielhaft die Herstellung eines mikrofluidischen Kanalsystems mit 2 oder mehreren Kanälen. In Figur 1a werden 3 Körper (1 - 3) zu einem Kanalsystem zusammengeführt. Dafür wird zunächst die Oberfläche des Körpers (1) über Verbindungselemente (4) mit einer Oberfläche des Körpers (2) verbunden. Aufgrund der Verbindungselemente ist es hierbei möglich, den Abstand der beiden Oberflächen der Körper 1 und 2 durch die Dicke der Verbindungselemente (4) zu definieren. Die Verbindungselemente (4) werden über einen Kleber mit den jeweiligen Oberflächen verbunden, wobei gleichzeitig durch den Kleber eine fluidische Abdichtung erfolgt. Die Körper 1 und 2 bilden somit einen fluidischen Kanal zwischen sich aus, der jeweils an seinem oberen und unteren Ende durch die Verbindungselemente (4) begrenzt wird. Die Tiefe des Kanals wird dabei durch die Kantenlänge (5) der Körper definiert, die senkrecht zur Flussrichtung (6) verläuft. Anhand der Zeichnung kann einfach verdeutlicht werden, dass, je nach Wahl, der Körper 1 bis 3 sowie der Verbindungselemente (4) ein beliebig hohes Aspektverhältnis eines Kanals gebildet werden kann. Hierbei ist lediglich darauf zu achten, dass die Verbindung zu den Verbindungselementen und Körpern, z. B. durch ein Harz, so beschaffen ist, dass die so verbundenen Kanalenden für ein Fluid nicht durchlässig sind. Das verwendete Klebemittel sollte weiterhin vorteilhafterweise bereits bei der Verwendung geringer Mengen zuverlässig abdichten, sodass die Kanalbreite nicht durch das zusätzlich Auftragen des Klebemittels vergrößert wird. Hierbei ist ebenfalls auf eine gleichmäßige Verteilung des Klebemittels zu achten.

In einem weiteren Schritt wird ein dritter Körper (3) über zwei weitere Verbindungselemente (4) mit jeweils einer weiteren Oberfläche des Körpers 1 und 2 verbunden. Die so gebildete Kanalstruktur bildet ein T-Stück aus, in dem ein erster Kanal, gebildet durch die Körper (1 und 2), einen zweiten Kanal, gebildet durch die Körper 1, 2 und 3, kreuzt.

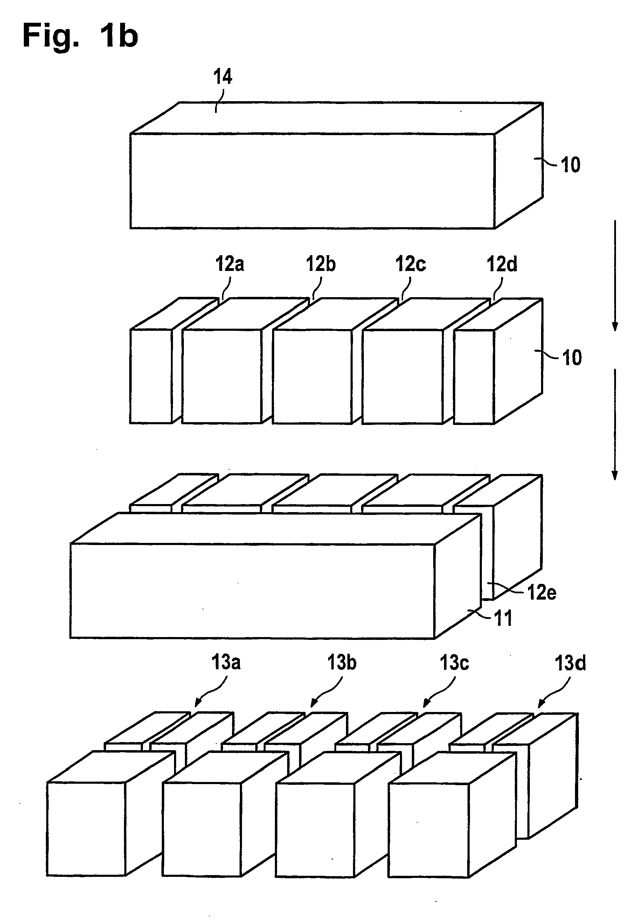

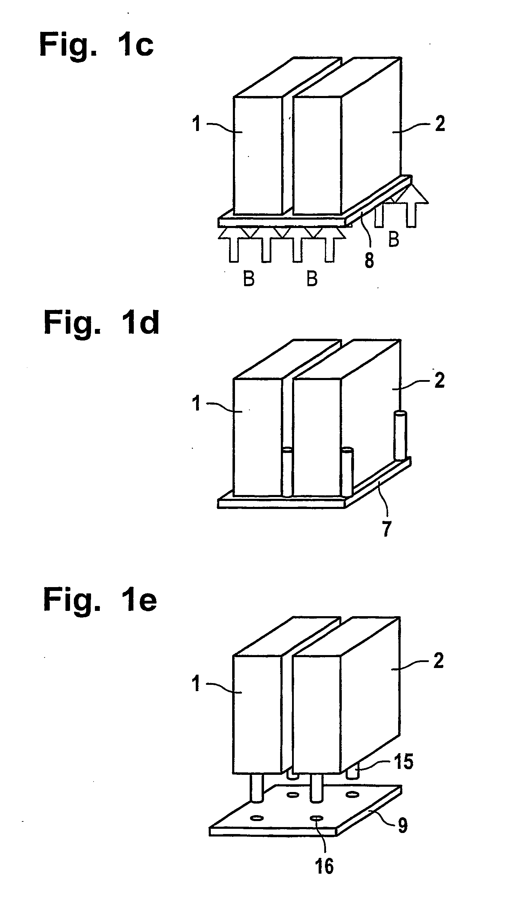

Figur 1 a veranschaulicht beispielhaft die Einfachheit des Verfahrens. Durch die Verwendung der Körper (1-3), bei denen es sich um Makrobausteine handelt, ist das Handling dieses Herstellungsverfahrens besonders einfach.

Eine weitere Vereinfachung zur Herstellung der dargestellten mikrofluidischen Struktur wird beispielhaft in Figur 1b gezeigt. Hierbei werden mehrere Kanalstrukturen in T-Form gleichzeitig produziert. Bei dem Herstellungsverfahren werden zunächst zwei nahezu gleichgroße Körper (10 und 11) verwendet. In einem ersten Schritt wird der Körper (10) so geschnitten, dass sich hieraus mehrere Körper in einer gewünschten Größe ergeben. Die Schnittlinien (12a - d) des Körpers (10) bilden bei dem späteren Kanalsystem die Kanäle aus. Hierfür werden die einzelnen Körper jeweils am oberen und unteren Bereich der Schnittlinien miteinander über einen definierten Abstand verbunden. Dies kann, wie bereits in Figur 1a gezeigt, mittels Verbindungselemente erfolgen oder z. B. direkt über einen Kleber verwirklicht werden. Vorteilhafterweise können die Körper auch über ein Klebemittel oder eine Folie, welche auf der Oberfläche (14) aufgebracht werden, miteinander verbunden werden, sodass sich kein Klebemittel im Inneren des Kanals befindet. In diesem Fall befindet sich der obere bzw. untere Bereich der Schnittstelle nicht im Inneren des ausgebildeten Kanals, sondern ist Bestandteil der Oberflächen (14) des Körpers (10). Der geschnittene und wieder miteinander verbundene Körper (10') stellt somit eine Kanalstruktur mit 4 parallel verlaufenden Kanälen identischer Ausbildung dar. Anschließend wird der zweite Körper (11) mit dem Körper (10') verbunden, sodass sich ein zusätzlicher Kanal (12e) bildet, in dem die Kanäle (12a-12d) einmünden. In einem abschließenden Schritt werden die zusammengefügten Körper (10' und 11) wiederum geschnitten, sodass sich jeweils vier mikrofluidische Strukturen (13a - 13d), deren Kanäle ein T-Stück ausbilden, ergeben.

Figur 1c - 1e zeigt beispielhaft einige weitere Möglichkeiten, durch die eine Verbindung von Körpern verwirklicht und vereinfacht werden kann. Hierbei ist jeweils darauf zu achten, dass die Verbindung jeweils so ausgebildet ist, dass eine fluidische Abdichtung der Kanalsysteme erfolgt und ein definierter Abstand zwischen den einzelnen Oberflächen der Körper garantiert ist. In Figur 1c werden zwei Körper aufgrund eines starken Magnetfeldes relativ zueinander positioniert. Wird die Magnetfeldstärke eines magnetischen Untergrundes (8) hinreichend groß gewählt, kann somit eine exakte Positionierung der Körper (1 und 2) auf dem magnetischen Untergrund (8) gewährleistet werden. Ein Vorteil einer solchen Verbindungsmöglichkeit ist unter anderem, dass der Zusammenbau eines mikrofluidischen Systems schnell und variabel erfolgen kann. Des weiteren sind keine Verbindungselemente notwendig, die jeweils eine definierte Kanalbreite der Mikrostruktur festlegen. Durch die Positionierung durch ein Magnetfeld kann auf Klebemittel verzichtet werden, sodass die damit verbundenen Nachteile (gleichmäßiges Auftragen des Klebemittels sowie inertes Verhalten des Klebematerials gegenüber dem Fluid) umgangen werden können. Die Kanalbreite eines solchen verbundenen mikrofluidischen Systems kann je nach Anwendungsbedarf schnell variiert werden, ohne dass hierfür jeweils entsprechende Verbindungselemente notwendig sind. Weiterhin ist auch die Struktur des mikrofluidischen Systems selbst variabel. Das System kann somit ohne Aufwand wechselnden Anforderungsbedingungen genügen und diesem angepasst werden. Voraussetzung für eine derartige Verbindungsmöglichkeit der Körper ist jedoch, dass die Körper selber aus einem magnetischen Material bestehen. Die hieraus unter Umständen resultierenden höheren Materialkosten eines derartigen mikrofluidischen Systems können durch den Vorteil von multiplen Verwendungsmöglichkeiten ausgeglichen werden. Derartige Systeme werden folglich vorteilhafterweise nicht zur Einmalverwendung eingesetzt, sondern z. B. im Laborbereich bei wechselnden Analyseverfahren. Der leicht reversible Zusammenbau des Systems erlaubt hierbei ebenfalls eine einfach zu handhabende Reinigung der Einzelbausteine.

Eine weitere Möglichkeit, Körper miteinander zu verbinden und zueinander zu positionieren, wird in Figur 1d gezeigt. Hierbei werden mittels einer Schablone (7) die Körper (1 und 2) relativ zueinander positioniert. Hierbei ist es einerseits denkbar, dass derartige Schablonen lediglich zur Vereinfachung des Herstellungsverfahrens dienen und nach einer Verbindung der beiden Körper (1 und 2) wieder aus dem System entfernt werden. Es ist jedoch auch vorstellbar, dass die Schablone (7) als Verbindungselement im mikrofluidischen System dient und in dieses integriert wird. Vorteile der Verwendung einer Schablone ist, dass Herstellungsverfahren von mikrofluidischen Systemen für jeweils eine Kanalbreite zu automatisieren. Es ist weiterhin denkbar, Schablonen spezifisch für unterschiedliche Kanalbreiten bereitzustellen, sodass die Fertigung der Systeme vereinfacht wird. Anforderungen an das Material der Körper werden aufgrund des Herstellungsverfahrens nicht gestellt, sodass die Materialwahl an das jeweilige Anwendungsgebiet angepasst werden kann. Ähnliches ergibt sich auch für die Positionierung der Körper (1 und 2) mittels eines Positionierungselementes (9), wie es in Figur 1e dargestellt wird. Hierbei wird über ein vorgegebenes Schlüssel-Schlossprinzip eine Positionierung der Körper auf ein Positionierungselement (9) erzielt. Das Herstellungsverfahren setzt voraus, dass ein entsprechendes Schlüsselelement (15) an den jeweiligen Körpern vorgesehen ist, sodass ein Zusammenwirken mit entsprechenden Elementen (16) des Positionierungselementes (9) erzielt wird. Alle gezeigten Herstellungsverfahren der Figuren 1c bis 1 e können dabei auf die Verwendung eines Klebemittels unter Umständen verzichten, wenn die gezeigten Verbindungen zwischen den Hilfsmitteln (7 - 9) und den Körpern (1 und 2) hinreichend fest erfolgt, sodass eine fluidische Abdichtung erreicht wird. Dies kann beispielsweise unter anderem dadurch bewirkt werden, dass die Körper (1 und 2) durch ihr Eigengewicht hinreichend fest gegen die Elemente (7 und 9) gepresst werden, oder in dem in Figur 1c gezeigtem Beispiel hinreichende magnetische Kräfte wirken.

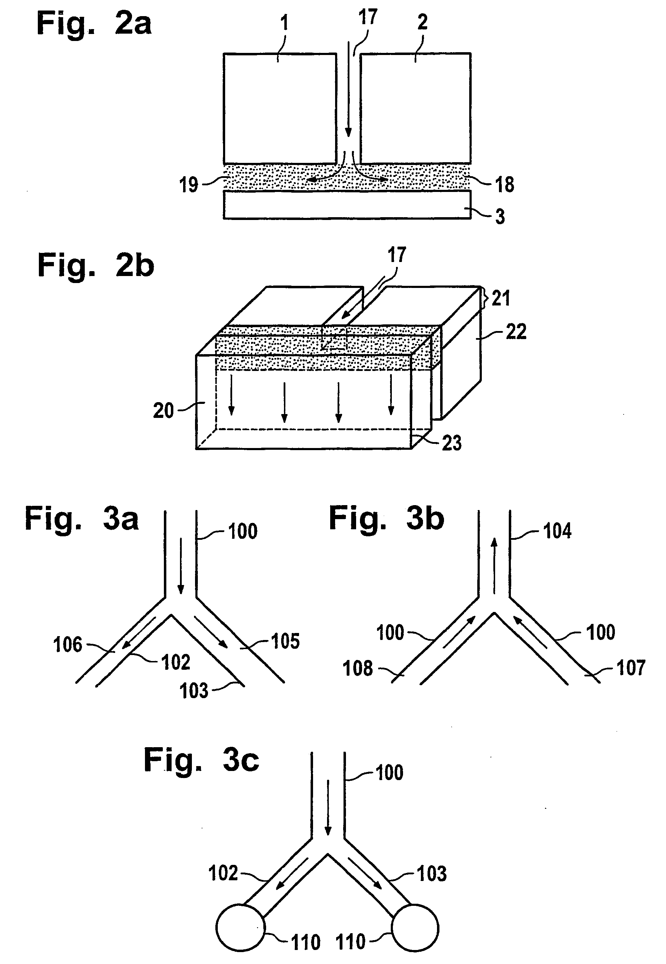

Figur 2 zeigt eine Obenauf- und Frontansicht eines mikrofluidischen Systems, bei denen die Kanäle eine T-Form bilden und ein Filtermaterial zur Separation einer Probe im Kanalsystem vorgesehen ist.

Figur 2a zeigt die Aufsicht auf eine Kanalstruktur, die durch die Körper (1 - 3) gebildet wird. Im gezeigten Beispiel wird das Fluid durch den Kanal (17) zwischen den Körpern (1 und 2) eingeleitet und von dort aus in den kreuzenden Kanal (18) überführt, der durch die Körper (1, 2 und 3) begrenzt wird. Innerhalb des oberen Bereichs des Kanals (18) befindet sich ein Filtermedium (19). Wie die Frontansicht der Figur 2b zeigt, ist die Tiefe des Kanals (17) wesentlich geringer als die des angrenzenden Kanals (18). Dies kann z. B. dadurch verwirklicht werden, dass die Kantenlänge (21) der Körper (1 und 2) entsprechend kurz gewählt wird und die Körper (1 und 2) mit einem weiteren Körper (22) verbunden werden. Zwischen den Körpern (1 und 2) und dem Körper (22) wird dabei jedoch kein Kanal ausgebildet, sondern es erfolgt eine direkte Verbindung der Elemente. Es ist jedoch auch vorstellbar, dass die Kantenlängen (21) der Körper (1 und 2) gleich der Kantenlänge (23) des Körpers (3) gewählt wird. Hierbei muss dann die Kanaltiefe zwischen Körper (1 und 2) über ein Verbindungselement entsprechend reguliert werden. Das Verbindungselement verfügen dann über eine entsprechende Höhe, die additiv mit der Kantenlänge (21) der Kantenlänge (23) des Körpers (3) entspricht. Das Verbindungselement erstreckt sich dann vorteilhafterweise über die gesamte Kanallänge des durch Körper (1 und 2) gebildeten Kanals (17). Der Kanal (18), der durch den Körper (1, 2 und 3) gebildet wird, besitzt im Vergleich zum Kanal (17) ein wesentlich höheres Aspektverhältnis, wobei die Kanaltiefe entsprechend über die Kantenlänge (23) definiert wird. In dem Kanal (18) wird im oberen Bereich ein Filtermedium integriert. Durch die unterschiedlichen Aspektverhältnisse der beiden Kanäle fließt ein Fluid ausschließlich von dem Kanal (17) im oberen Bereich des Kanals (18) ein, in dem sich das Filtermedium (19) befindet. Das Fluid wird durch das Filtermedium (19) geleitet und wird dort separiert. Hierbei gewährleistet ein genügend hohes Aspektverhältnis, dass eine ausreichende Trennung des Fluids durch das Filtermedium erfolgt. Die Filtration erfolgt z. B. aufgrund der Schwerkraft, wobei sich das Filtrat im unteren Ende des Kanales absetzt. Mit Hilfe einer derartigen Kanalstruktur ist es folglich möglich, auch geringe Fluidmengen zu filtrieren und so z. B. eine Separation der im Fluid enthaltenen Stoffe zu erreichen. Als Filtermedium sind hierbei, in Abhängigkeit des Anwendungsgebietes, handelsübliche Filtermaterialien denkbar. Es ist jedoch auch vorstellbar, dass durch die Wahl der Kanalbreite selbst ein Filterungsprozess hervorgerufen wird. Hierbei wird die Kanalbreite so klein gewählt, dass nur bestimmte, als Filtrat vorgesehene Fluidbestandteile den Kanal passieren können. Die Anpassung der Kanalbreite auf bestimmte Fluidbestandteile ist nur ein vorteilhaftes Anwendungsbeispiel, das insbesondere durch das erfindungsgemäße Systems im Vergleich zum Stand der Technik besonders einfach zu verwirklichen ist, da eine konstante und definierte Kanalbreite über den gesamten Verlauf der Kanaltiefe gewährleistet werden kann. In Abhängigkeit von dem Anwendungsgebiet kann natürlich auch gezielt eine vorbestimmte Verjüngung des Kanales entlang seiner Kanaltiefe gewählt werden. Dies wird dadurch verwirklicht, dass z. B. die Verbindungselemente für den oberen und dem unteren Kanalende unterschiedlich dick gewählt werden.

Figur 3 zeigt ein mikrofluidisches Kanalsystem, wobei die Kanäle in Form eines Y-Stücks miteinander verbunden sind. Über den Kanal (100) wird, wie in Figur 3a gezeigt, ein Fluid eingeleitet. Der Fluidstrom wird durch die Kreuzung der Kanäle (102 und 103) aufgeteilt. An der Kreuzung der Kanäle kann hierbei z. B. durch die Wahl der Kanalbreite eine Separation des Fluids erfolgen. Im gezeigten Beispiel der Figur 3a ist die Breite des Kanals (102) kleiner gewählt als die des Kanals (103). Beispielsweise kann eine solche Kanalstruktur zur Plasmagewinnung aus Vollblut oder zur Entfernung von an Partikeln gebundenen Probenkomponenten dienen. Hierbei wird durch die Verzweigung des Mikrokanals der überwiegende Anteil eines Erythrozyten vom Blutplasma getrennt. Durch die reduzierte Kanalbreite des Kanals (102) werden die Erythrozyten an der Verzweigung des Kanals (100) vom Blutplasma getrennt, sodass ein an Erythrozyten angereichertes Blut entlang des Kanals (103) fließt, während das Blutplasma aus dem Kanal (102) gewonnen werden kann. Vorzugsweise wird hierfür die Kanalbreite des Kanals (102) so gewählt, dass sie einigen wenigen Erythrozytendurchmessern entspricht. Das hohe Aspektverhältnis der Kanalstruktur erlaubt hierbei einen hohen Volumendurchsatz zur Plasmaseparierung, obwohl eine Minimierung der Kanalbreite erfolgt. Dies bedeutet, dass die Filterkapazität im dargestellten Beispiel durch die Vergrößerung der Kanaltiefe erheblich verbessert werden kann. Figur 3a zeigt, dass aufgrund des beliebig frei wählbaren Aspektverhältnisses eine Probenaufbereitung einfach, ohne Verwendung von Filtermaterial, umgesetzt werden kann. Weitere Anwendungsbeispiele werden in Figur 3b und 3c gezeigt.

In Figur 3b werden durch die Kanäle (100) zwei unterschiedliche Fluide (107 und 108) eingeleitet, wobei es im Kanal (104) zu einer Durchmischung der Fluide kommt. Hierbei zeigt sich bei der Durchmischung der Fluide, dass bei einer groß gewählten Kanaltiefe eine Mischung von zwei verschiedenen Fluiden schnell und vollständig erfolgen kann. Dies ist dadurch begründet, dass der Kontakt der zwei Fluide entlang der gesamten Kanaltiefe erfolgen kann. Je größer diese gewählt wird, desto größer wird die Kontaktfläche der Fluide, die zur Durchmischung vorgesehen sind. Um einen gleichen Fluidstrom im Stand der Technik bei niedrigerem Aspektverhältnis erzielen zu können, müssten hierbei die Kanäle aufgrund einer geringeren Tiefe breiter gewählt werden. Eine Gegenüberstellung der Systeme verdeutlicht schnell, dass eine Durchmischung zweier Fluide bei großer Kanalbreite im gleichen Zeitraum nur unvollständig erfolgt. Prinzipiell findet die Mischung zweier Fluide beispielsweise - wie bereits erwähnt - zur Herstellung von Verdünnungsreihen, Konzentrationsgradienten, Elutionsgradienten oder z. B. Enzymsubstratgemischen statt, um nur einige Beispiele zu nennen.

Bei der Figur 3c verläuft der Fluidstrom analog zu Figur 3a. Hierbei sind jedoch die Kanäle (102) und (103) jeweils mit identischen Ausmaßen gewählt. Im gezeigten Beispiel wird die Kanalstruktur dafür verwendet, um das Fluid gleichmäßig auf die beiden Kanäle aufzuteilen und jeweils zu einem Testfeld (110) hinzuleiten. Ein derartiges Anwendungsbeispiel wird z. B. benötigt, um mehrere Testverfahren an einer Probe gleichzeitig vornehmen zu können. Prinzipiell sind natürlich vielfältige Kanalstruktur in Form eines Netzwerkes vorstellbar, die eine Vereinfachung eines Probenhandlings verwirklichen. Durch die erfindungsgemäßen Mikrostrukturen kann hierbei gleichzeitig sowohl eine Separation eines Fluids stattfinden, eine Durchmischung von Fluiden oder ein dosiertes Hinzufügen oder Abzweigen einer Fluidmenge während eines Verfahrensablaufs gewährleistet werden. Das erfindungsgemäße System ermöglicht 3-Dimensionale Verzweigung von Kanälen mit hohen wie auch geringerem Aspektverhältnis. Dies ist insbesondere von Vorteil, wenn hochkomplexe Kanalnetzwerke auf kleinen Grundflächen integriert werden müssen. Generell zeigt sich, dass bei einer gegebenen Breite eines Mikrokanals die Erhöhung des Aspektverhältnisses die Zeit zur vollständigen Homogenisierung oder Separation zweier oder mehrerer Ströme erniedrigt.

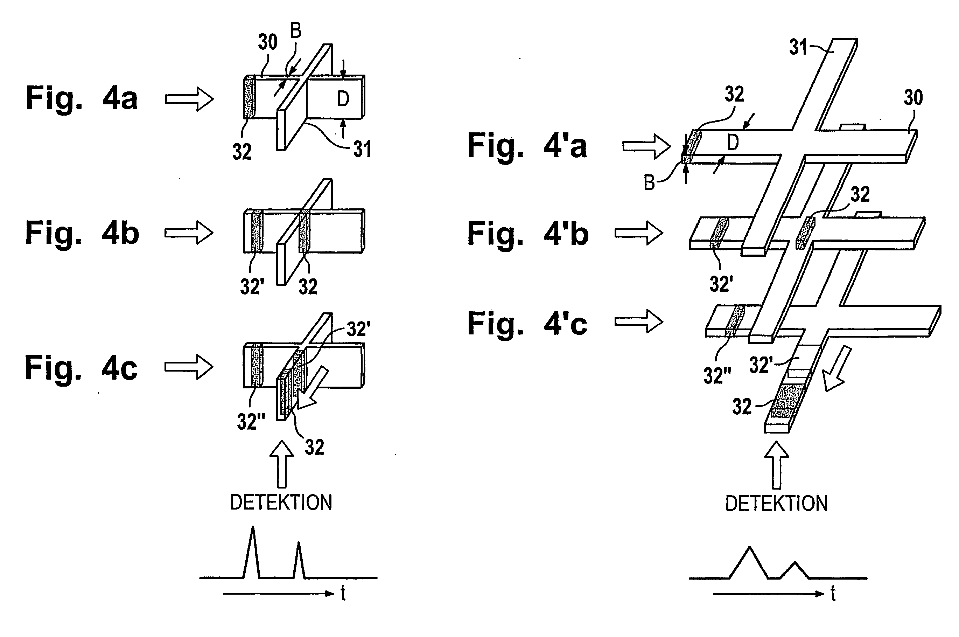

Figur 4a und 4b bis 4c stellt beispielhaft die erfindungsgemäße mikrofluidische Kanalstruktur mit hohem Aspektverhältnis einer mikrofluidischen Kanalstruktur mit niedrigem Aspektverhältnis gegenüber und zeigt anhand eines chromatographischen Trennverfahren die erfindungsgemäßen Vorteile. Für ein chromatographisches Trennverfahren zweier Komponenten wird eine Probe (32) in eine mikrofluidische Kanalstruktur eingeführt. Die Kanalstruktur ist beispielhaft in dem gezeigten Beispiel als Kreuzstück ausgebildet. Gelangt die Probe (32) in die Kanalstruktur, findet eine Trennung der Probenbestandteile statt, die in Abhängigkeit des in dem jeweiligen Kanal (30 und 31) befindlichen Trennmediums eine unterschiedliche Fließgeschwindigkeit aufweisen. In Figur 4 ist dieses durch die Kennzeichnung der verschiedenen Probenbestandteile (32), (32') und (32") verdeutlicht. An der Verzweigung der Kanäle (31) und (30) werden die Probenbestandteile in den Kanal (31) überführt. Am Ende des Kanales (31) wird mittels eines Detektors die Probenbestandteile vermessen und identifiziert.

Allgemein zeigt sich bei Trennverfahren, dass die Trennschärfe zweier Probenbestandteile eine wichtige Bedeutung in der Analyse zukommt. Hierbei wird durch eine Verbreiterung der einzelnen Banden eines Probenbestandteiles die Trennschärfe zweier Probenbestandteile maßgeblich erniedrigt. Es zeigt sich jedoch, dass die Trennung zweier Komponenten in einem chromatographischen Trennkanal erheblich verbessert werden kann, wenn die Breite des Kanals möglichst klein gewählt wird. Um ein vorgegebenes Probenvolumen dennoch bei gleicher Zeitdauer bewältigen zu können, muss bei einer Verringerung der Kanalbreite eine entsprechende Vergrößerung der Kanaltiefe erfolgen. Die Gegenüberstellung der Figur 4a bis 4c und 4' bis 4'c stellt diesen Effekt anschaulich dar. Unter Annahme laminarer Strömung bildet sich im fluidischen Kanalsystem ein parabolisches Strömungsprofil aus, welches die Abhängigkeit der Strömungsgeschwindigkeit von der Position innerhalb der Kanalbreite wiedergibt. Die resultierende Verteilung der Probenbestandteile (32) und (32') im Kanal (31) wird durch die Gegenüberstellung in Figur 4 verdeutlicht. Eine Verbreiterung des Kanals führt bei der Detektion eines Stoffes zur Verbreiterung der Bande unter Annahme eines Gaus-Profils. Die Gegenüberstellung zeigt somit, dass durch die Detektion der Probenbestandteile im erfindungsgemäßen Kanalsystem mit hohem Aspektverhältnis eine wesentlich geringere Bandbreite der vom Detektor ausgegebenen Signale erzielt werden kann. Hierdurch bedingt wird die Trennschärfe des Systems maßgeblich erhöht. Wird die Trennschärfe bei gegebenem Probendurchsatz als konstant angenommen, ist es folglich möglich, eine Vergrößerung der Probenvolumenaufgabe zu erzielen.

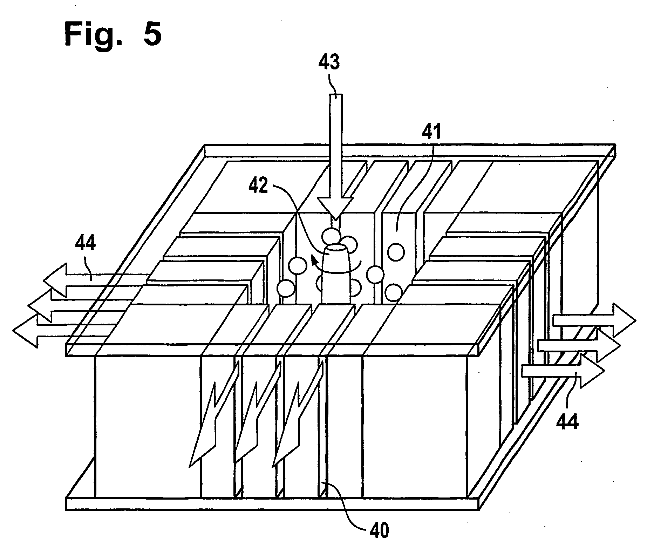

Figur 5 zeigt eine mikrofluidische Kanalstruktur, die z. B. beim automatisierten Probenhandling eingesetzt werden kann. Hierbei werden mehrere Kanal-Arrays (40) in einer mikrofluidischen Struktur vereint. Die Kanal-Arrays (40) schließen dabei einen Hohlraum (41) ein, in dem sich eine Suspension befindet. Im Hohlraum (41) ist ein Rührer (42), der für eine permanente Durchmischung der Suspension (43) sorgt. Durch Wahl der geeigneten Kanalbreiten erfolgt eine Filtration der Suspension, sodass an den Kanalausgängen jeweils ein Filtrat (44) zur Weiterverarbeitung gelangt. Hierbei ist es z. B. denkbar, dass die Kanalbreiten der jeweiligen Kanal-Arrays unterschiedlich groß gewählt werden, sodass Filtrate unterschiedlicher Qualität entsprechend einem späteren Anwendungsgebiet erzeugt werden. Figur 5 veranschaulicht, dass das erfindungsgemäße System ein automatisches Probenhandling selbst für mikrofluidische Ströme zulässt. Prinzipiell sind dabei vielfältige Ausführungsformen von 2- oder 3-Dimensionalen Netzstrukturen denkbar. Hierbei wird durch das erfindungsgemäße Verfahren der Mikrostruktur im wesentlichen keine Einschränkung in Form und Material auferlegt, sodass das System optimal dem jeweiligen Anwendungsgebiet angepasst werden kann. Insbesondere erweist sich das erfindungsgemäße System und Verfahren in Anwendungsgebieten, in denen Kanäle mit einem hohen Aspektverhältnis vorteilhaft sind, als geeignet.

## Patentansprüche

1. Kanalsystem für mikrofluidische Ströme mit einem großen Aspektverhältnis, beinhaltend
- einen ersten und einen zweiten Körpen (1,2) die miteinander in der Weise verbunden sind, dass eine erste Oberfläche des ersten Körpers und eine zweite Oberfläche des zweiten Körpers einen definierten Abstand der kleiner als 1mm ist, zueinander haben und ein erster fluidischer Kanal (17) zwischen der ersten und der zweiten Oberfläche gebildet wird,
- einen dritten Körper (3), der mit den zwei Körpern oder einem weiteren Körper in der Weise verbunden ist, dass eine dritte Oberfläche des dritten Körpers mit jeweils einer weiteren Oberfläche von zwei Körpern einen definierten Abstand zueinander hat und ein zweiter fluidischer Kanal (18) zwischen den zwei weiteren Oberflächen und der dritten Oberfläche gebildet wird,
- wobei ein Kanalsystem gebildet wird, bei dem der erste Kanal den zweiten Kanal kreuzt, sodass das Kanalsystem mindestens drei fluidische Anschlüsse beinhaltet, durch die ein Fluid zu- und / oder abfließen kann.

2. Kanalsystem gemäß Anspruch 1,
bei dem mindestens eine Seitenlänge von zwei miteinander verbundenen Oberflächen, die die Tiefe des Kanals bestimmt, eine Länge von größer als 1 cm besitzen.

3. Kanalsystem gemäß Anspruch 1,
bei dem mindestens eine Seitenlänge von zwei miteinander verbundenen Oberflächen, die die Tiefe des Kanals bestimmt, um ein Vielfaches größer ist als der definierte Abstand zwischen den Oberflächen.

4. Kanalsystem gemäß Anspruch 1,
bei dem die Oberflächen der Körper über ein Verbindungselement miteinander verbunden sind.

5. Kanalsystem gemäß Anspruch 4,
bei dem die Verbindungselemente aus einer Folie bestehen.

6. Kanalsystem gemäß Anspruch 4,
bei dem die Verbindungselemente im Wesentlichen eine konstante Dicke aufweisen.

7. Kanalsystem gemäß Anspruch 1,
mit Körpern, bei denen die Oberflächen, die einen Kanal begrenzen, eine geringe Rauhigkeit im Verhältnis zum definierten Abstand zwischen den Oberflächen besitzt.

8. Kanalsystem gemäß Anspruch 1,
bei dem die sich kreuzenden Kanäle im Wesentlichen ein T-Stück bilden.

9. Kanalsystem gemäß Anspruch 1,
bei dem die sich kreuzenden Kanäle im Wesentlichen ein Y-Stück bilden.

10. Kanalsystem gemäß Anspruch 1,
bei dem die sich kreuzenden Kanäle im Wesentlichen ein Kreuz bilden.

11. Kanalsystem gemäß Anspruch 1,
bei dem die Oberflächen der Körper, die jeweils einen Kanal begrenzen, im wesentlichen ein gleiches Flächenmaß besitzen.

12. Kanalsystem gemäß Anspruch 1,
das mindestens einen Kanal mit einem Aspektverhältnis von größer 3 besitzt.

13. Kanalsystem gemäß Anspruch 1,
bei dem in mindestens einem Kanal ein Trennmedium vorhanden ist.

14. Kanalsystem gemäß Anspruch 1,
bei dem mindestens zwei Oberflächen unterschiedliche physikalische und/oder chemische Eigenschaften aufweisen.

15. Kanalsystem gemäß Anspruch 1,
bei dem mindestens eine Oberfläche mit mikrooptischen Bauelementen versehen ist.

16. Kanalsystem gemäß Anspruch 1,
bei dem die Temperatur mindestens eines Körpers eingestellt werden kann.

17. Kanalsystem gemäß Anspruch 1,
bei dem in mindestens einem Kanal ein Medium vorhanden ist, welches ein steuerbares Volumen aufweist.

18. Verfahren zur Herstellung mikrofluidischer Kanalsysteme mit einem großen Aspektverhältnis beinhaltend
- Verbinden einer ersten Oberfläche eines ersten Körpers mit einer zweiten Oberfläche eines zweiten Körper in der Weise, dass ein definierter Abstand, der kleiner als 1mm ist, zwischen der ersten und der zweiten Oberfläche vorliegt und ein fluidischer Kanal zwischen der ersten und der zweiten Oberfläche gebildet wird,
- Verbinden einer dritten Oberfläche eines dritten Körpers mit jeweils einer weiteren Oberfläche der zwei Körpern oder eines weiteren Körpers in der Weise, dass ein definierter Abstand zwischen der dritten Oberfläche und der zwei weiteren Oberflächen von zwei Körpern vorliegt,
- wobei ein Kanalsystem gebildet wird, bei dem der erste Kanal den zweiten Kanal kreuzt, sodass das Kanalsystem mindestens drei fluidische Anschlüsse beinhaltet, durch die ein Fluid zu- und / oder abfließen kann.

19. Verfahren gemäß Anspruch 18,
bei dem beim Verbindung zweier Oberflächen ein Verbindungselement zwischen die Oberflächen eingefügt wird

20. Verfahren gemäß Anspruch 19,
bei dem das Verbindungselement als Abstandshalter verwendet wird und das Verbindungselement nach dem Verbinden der Körper aus dem Kanalsystem entfernt werden.

21. Verfahren gemäß Anspruch 19,
bei dem die Oberflächen mittels der Verbindungselemente verbunden werden.

22. Verfahren gemäß Anspruch 18
bei dem die Körper mit einem Klebemittel verbunden werden.

23. Verfahren gemäß Anspruch 18,
bei dem ein Kanalsystem gemäß einer der Ansprüche 1 bis 17 hergestellt wird.

24. Kanalsystem gemäß Anspruch 1,
das mit einem Verfahren gemäß einen der Ansprüche 18 bis 23 hergestellt wird.

## Claims

1. Channel system for microfluidic flows with a large aspect ratio comprising
- a first and a second body (1, 2) which are connected to one another in such a manner that a first surface of the first body and a second surface of the second body are at a defined distance from one another which is less than 1 mm and a first fluidic channel (17) is formed between the first and the second surface,
- a third body (3) which is connected to the two bodies or to a further body in such a manner that a third surface of the third body is at a defined distance to in each case one further surface of two bodies and a second fluidic channel (18) is formed between the two further surfaces and the third surface,
- wherein a channel system is formed in which the first channel crosses the second channel such that the channel system comprises at least three fluidic connections through which a fluid can flow in and/or out.

2. Channel system according to claim 1,
in which at least one side length of two joined surfaces which determines the depth of the channel has a length of more than 1 cm.

3. Channel system according to claim 1,
in which at least one side length of two joined surfaces which determines the depth of the channel is many times larger than the defined distance between the surfaces.

4. Channel system according to claim 1,
in which the surfaces of the bodies are connected together by a connecting element.

5. Channel system according to claim 4,
in which the connecting elements consist of a foil.

6. Channel system according to claim 4,
in which the connecting elements have an essentially constant thickness.

7. Channel system according to claim 1,
comprising bodies in which the surfaces which border a channel have a lower roughness compared to the defined distance between the surfaces.

8. Channel system according to claim 1,
in which the crossing channels essentially form a T piece.

9. Channel system according to claim 1,
in which the crossing channels essentially from a Y piece.

10. Channel system according to claim 1,
in which the crossing channels essentially form a cross.

11. Channel system according to claim 1,
in which the surfaces of the bodies which each border a channel essentially have an equal surface measurement.

12. Channel system according to claim 1,
which has at least one channel with an aspect ratio of more than 3.

13. Channel system according to claim 1,
in which a separating medium is present in at least one channel.

14. Channel system according to claim 1,
in which at least two surfaces have different physical and/or chemical properties.

15. Channel system according to claim 1,
in which at least one surface is provided with microoptical components.

16. Channel system according to claim 1,
in which the temperature of at least one body can be adjusted.

17. Channel system according to claim 1,
in which a medium is present in at least one channel which has a controllable volume.

18. Process for producing microfluidic channel systems with a large aspect ratio comprising
- connecting a first surface of a first body to a second surface of a second body in such a manner that there is a defined distance which is less than 1 mm between the first and the second surface and a first fluidic channel is formed between the first and the second surface,
- connecting a third surface of a third body to in each case a further surface of the two bodies or of a further body in such a manner that there is a defined distance between the third surface and the two further surfaces of the two bodies,
- wherein a channel system is formed in which the first channel crosses the second channel such that the channel system comprises at least three fluidic connections through which a fluid can flow in and/or out.

19. Process according to claim 18,
in which a connecting element is inserted between the surfaces when connecting two surfaces.

20. Process according to claim 19,
in which the connecting element is used as a spacer and the connecting element is removed from the channel system after joining the bodies.

21. Process according to claim 19,
in which the surfaces are connected by means of the connecting elements.

22. Process according to claim 18,
in which the bodies are connected with an adhesive.

23. Process according to claim 18,
in which a channel system according to one of the claims 1 to 17 is produced.

24. Channel system according to claim 1,
which is produced by a process according to one of the claims 18 to 23.

## Revendications

1. Système à canaux pour flux microfluidiques avec un rapport d'aspect élevé, comportant
- un premier et un deuxième corps (1,2) qui sont reliés l'un à l'autre de manière telle qu'une première surface du premier corps et une deuxième surface du deuxième corps sont écartées d'une distance définie qui est inférieure à 1 mm et qu'un premier canal (17) fluidique est formé entre la première et la deuxième surface,
- un troisième corps (3) qui est relié aux deux corps ou à un autre corps de manière telle qu'une troisième surface du troisième corps est écartée d'une distance définie à chaque fois d'une autre surface de deux corps et qu'un deuxième canal (18) fluidique est formé entre les deux autres surfaces et la troisième surface,
- un système à canaux étant formé, dans lequel le premier canal croise le deuxième canal, de manière telle que le système à canaux comprend au moins trois raccords fluidiques, dans lesquels un fluide peut entrer et/ou dont il peut s'écouler.

2. Système à canaux selon la revendication 1, dans lequel au moins une longueur latérale de deux surfaces reliées l'une à l'autre, qui détermine la profondeur du canal, présente une longueur supérieure à 1 cm.

3. Système à canaux selon la revendication 1, dans lequel au moins une longueur latérale de deux surfaces reliées l'une à l'autre, qui détermine la profondeur du canal, est supérieure d'un facteur multiple à la distance définie entre les surfaces.

4. Système à canaux selon la revendication 1, dans lequel les surfaces des corps sont assemblées l'une à l'autre via un élément d'assemblage.

5. Système à canaux selon la revendication 4, dans lequel les éléments d'assemblage sont constitués par une feuille.

6. Système à canaux selon la revendication 4, dans lequel les éléments d'assemblage présentent essentiellement une épaisseur constante.

7. Système à canaux selon la revendication 1, avec des corps où les surfaces qui délimitent un canal présentent une faible rugosité par rapport à la distance définie entre les surfaces.

8. Système à canaux selon la revendication 1, où les canaux qui se croisent forment essentiellement une pièce en T.

9. Système à canaux selon la revendication 1, où les canaux qui se croisent forment essentiellement une pièce en Y.

10. Système à canaux selon la revendication 1, où les canaux qui se croisent forment essentiellement une croix.

11. Système à canaux selon la revendication 1, où les surfaces des corps qui délimitent à chaque fois un canal présentent essentiellement une surface identique.

12. Système à canaux selon la revendication 1, qui présente au moins un canal avec un rapport d'aspect supérieur à 3.

13. Système à canaux selon la revendication 1, dans lequel un agent de séparation est présent dans au moins un canal.

14. Système à canaux selon la revendication 1, dans lequel au moins deux surfaces présentent des propriétés physiques et/ou chimiques différentes.

15. Système à canaux selon la revendication 1, dans lequel au moins une surface est pourvue d'éléments microoptiques.

16. Système à canaux selon la revendication 1, dans lequel la température d'au moins un corps peut être réglée.

17. Système à canaux selon la revendication 1, dans lequel un agent qui présente un volume réglable est présent dans au moins un canal.

18. Procédé pour la production de systèmes à canaux microfluidiques avec un rapport d'aspect important, comportant
- l'assemblage d'une première surface d'un premier corps avec une deuxième surface d'un deuxième corps de manière telle qu'il existe une distance définie qui est inférieure à 1 mm entre la première et la deuxième surface et qu'il se forme un canal fluidique entre la première et la deuxième surface,
- assemblage d'une troisième surface d'un troisième corps avec à chaque fois une autre surface des deux corps ou d'un autre corps de manière telle qu'il existe une distance définie entre la troisième surface et les deux autres surfaces de deux corps,
- un système à canaux étant formé, dans lequel le premier canal croise le deuxième canal, de manière telle que le système à canaux comprend au moins trois raccords fluidiques, dans lesquels un fluide peut entrer et/ou dont il peut s'écouler.

19. Procédé selon la revendication 18, dans lequel un élément d'assemblage est inséré entre les surfaces lors de l'assemblage de deux surfaces.

20. Procédé selon la revendication 19, dans lequel l'élément d'assemblage est utilisé comme écarteur et l'élément d'assemblage est éliminé du système à canaux après l'assemblage des corps.

21. Procédé selon la revendication 19, dans lequel les surfaces sont assemblées via des éléments d'assemblage.

22. Procédé selon la revendication 18, dans lequel les corps sont assemblés avec un adhésif.

23. Procédé selon la revendication 18, dans lequel on réalise un système à canaux selon l'une quelconque des revendications 1 à 17.

24. Système à canaux selon la revendication 1, qui est réalisé par un procédé selon l'une quelconque des revendications 18 à 23.
